(19) **Europäisches Patentamt / European Patent Office / Office européen des brevets**

(11) **EP 1 424 790 B1**

(12) **EUROPEAN PATENT SPECIFICATION**

(45) Date of publication and mention
of the grant of the patent:
**22.08.2007 Bulletin 2007/34**

(51) Int Cl.:
**H04B 7/26** (2006.01)

(21) Application number: **02425740.4**

(22) Date of filing: **29.11.2002**

(54) **Synchronising base stations in cellular communication systems**

Synchronisierung von Basisstationen in einem zellularen Kommunikationssystem

Synchronisation de stations de base dans un système de communication cellulaire

(84) Designated Contracting States:
**AT BE BG CH CY CZ DE DK EE ES FI FR GB GR IE IT LI LU MC NL PT SE SK TR**

(43) Date of publication of application:
**02.06.2004 Bulletin 2004/23**

(73) Proprietor: **Siemens S.p.A.
20126 Milano (IT)**

(72) Inventors:
- **Capaccioli, Massimo
 20099 Sesto San Giovanni (MI) (IT)**
- **Rispo, Domenico
 80014 Giugliano in Campania (NA) (IT)**

(74) Representative: **Giustini, Delio**
 Siemens S.p.A.
 **V. le Piero e Alberto Pirelli, 10
 20126 Milano (IT)**

(56) References cited:
**EP-A- 1 041 746          WO-A-01/91337**

- **"3GPP TR 25.928: 3rd Generation Partnership Project;Technical Specification Group (TSG); Radio Access Network (RAN); 1.28 Mcps functionality for UTRA TDD Physical Layer (Release 4)" 3GPP TR 25.928 V4.0.1, March 2001 (2001-03), page 1,14-16,67 XP002236894**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

<u>Field of the Invention</u>

The present invention relates to techniques for synchronising base stations in cellular communication systems, as generally disclosed e.g. in "3GPP TR 25.928: 3rd Generation Partnership Project; Technical Specification Group (TSG); Radio Access Network (RAN); 1.28 Mcps functionality for UTRA TDD Physical Layer (Release 4)"3GPP TR 25.928 V4.0.1 March 2001 (2001 03), page 1,14-16,67, XP002236894, after which the preamble of Claim 1 was patterned. EP-A-1 041 746, which describes a process for synchronising base stations in a wireless communication network is of interest for the invention.

Communication systems employing TDD (Time Division Duplex) transmission schemes are widely known, in particular for application to digital cellular communication systems.

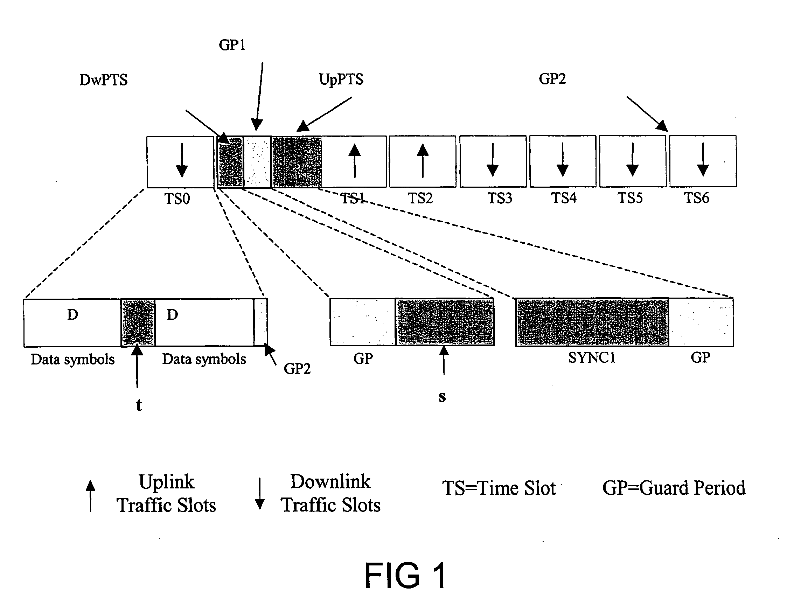

In Figure 1 a frame structure adopted in such a telecommunication system is depicted. It consists of several time slots, TS0,...,TS6 some of which, for example the slots TS0, TS3, TS4, TS5, and TS6, are intended for conveying data in the downlink direction (base station to mobile terminal) while others, such as slots TS1 and TS2, are intended for conveying data in the uplink direction (mobile station to base station).

During a traffic active slot, for example TS0, data are transmitted in the form of sequences of symbols D. The slot TS0 also includes a midamble sequence t comprising pilot symbols enabling the channel to be estimated and a guard period GP2.

In such a system, several mobile terminals or base stations can simultaneously transmit or receive data in the same time slot. The connections are differentiated by code division multiplexing or CDMA(Code Division Multiple Access).

Since the same frequency can be used both in the uplink direction and in the downlink direction, it is essential to ensure synchronisation of the base stations. This is because, if such were not the case, a first mobile terminal transmitting at high power in an uplink channel in a given adjacent cell could interfere with a second mobile terminal, close to the first, receiving data over a downlink channel. The synchronisation constraint imposed between adjacent base stations is typically around a few microseconds.

<u>Background Art</u>

In a known synchronisation method (see e.g. EP-A-1 195 924) an initial phase is provided, for example during the setting up the network or a new base station, where an approximate synchronisation is provided by the network, or more precisely by the radio access controller RNC controlling several adjacent base stations. A fine synchronisation is then effected regularly by the radio interface between adjacent base stations. The purpose of this fine synchronisation is notably to correct any difference in the sequencing clocks between adjacent base stations. In order to do this, certain time slots are reserved for the transmission and reception of a synchronisation signal, specifically a downlink pilot time slot DwPTS, an uplink pilot time slot UpPTS and a protection time slot GP1 are provided in the frame structure.

A time slot dedicated to synchronisation comprises essentially a synchronisation sequence or synchronisation code s and a guard period GP.

Synchronisation is obtained, in a manner known per se, by correlating the received sequence with a sequence which is a replica of the transmitted sequence. The correlation is effected over a time window with a length given by the margin of accuracy of the approximate synchronisation. Thus, when a base station receives a synchronisation sequence and detects a correlation peak in this window, it can properly synchronise with the adjoining base stations.

This prior art method essentially suffers from poor reliability and accuracy in the calculation of the timing offset.

<u>Object of the Invention</u>

The object of the present invention is thus to overcome the drawbacks of the prior art arrangements considered in the foregoing while providing an improved solution for synchronising base stations in digital cellular communication systems.

<u>Summary of the Invention</u>

According to the invention such an obiect is achieved by means of a method having the features set forth the annexed claims, which form an integral part of the description herein. The invention also relates to a corresponding communication system and a corresponding computer program product directly loadable in the memory of a digital computer and comprising software code portions for performing the method of the invention when the product is run on a computer.

Brief description of the Drawings

Further objects, features and advantages of the present invention will become apparent from the following detailed description and annexed drawings, which are provided by way of non limiting example, wherein:

- figure 1, already partly referred in the foregoing, shows a basic diagram of a radio frame used in Time Division Duplex (TDD) digital cellular communication Systems;
- figure 2 shows a basic diagram of an embodiment of the method of the invention;
- figures 3, 4 and 5 show comparison diagrams between the performances of the method of the invention and a method according the prior art.

Detailed description of a preferred embodiment of the Invention

The basic concept underlying the presently preferred embodiment of the invention is a difference method that makes use of two pilot channels, specifically a synchronisation code s and a midamble sequence t, having with a fixed mutual position, i.e. a fixed time difference, in the frame structure.

In describing a preferred embodiment of the invention, reference will be generally made to a TDD digital cellular communication system (of a known type and therefore not shown in the drawings) including a plurality of base stations intended to support communication of a plurality of mobile terminals. Operation of each base station is supervised in a known matter by a base station controller BSC.

In the following, two base stations will be considered and referred to as "reference" base station and "slave" base station respectively. Specifically, the slave base station is defined as a base station intended to be synchronised to a selected reference base station.

The method disclosed herein is preferably applied in the initial phase of the synchronisation procedure where the slave base station does not support traffic and performs measurements over a frame time period. Also it will be assumed that the reference base station is already known, i.e. "assigned" to the slave base station.

The slave base station is thus in a position to decode, within the frame structure shown in figure 1, the synchronisation code s and the midamble sequence t of the reference base station.

This is currently effected by means of a known correlation process repeated over a chosen number $N_F$ of consecutive frames, and then all collected frame measurements are used to extract one single averaged measurement for both pilot channels, comprised of the synchronisation code s and the midamble sequence t.

At this point, the slave base station calculates all possible difference values among the positions of the best correlation peaks corresponding for both pilot channels.

Among these, the slave base station verifies if at least one expected difference value exists representing the distance between the position of the synchronisation code s and the midamble sequence code on the frame structure, e.g. 544 chips in length.

From the expected difference value, the slave base station calculates the position of the synchronisation code s and of the midamble sequence code t to derive a parameter $T_{OFF}$ (Frame_Offset_Slave), that is the time difference between the reference base station frame timing as received at the slave base station and the slave base station own frame timing.

From the measured value of $T_{OFF}$, the base station controller (BSC) calculates the actual timing offset $\Delta T_{sync}$, (Timing Adjustment) that represents the timing offset between the slave base station frame boundary and the reference base station frame boundary.

The actual timing offset $\Delta T_{sync}$ is derived from $T_{OFF}$ by taking into account the propagation delay $T_{delay}$ between the slave base station and the reference base station. $T_{delay}$ is estimated in a known manner and generally $\Delta T_{sync} = T_{OFF} - T_{delay}$

Referring to a TD-SCDMA (Synchronous Time Division Code Division Multiple Access) radio system, the difference method disclosed herein exploits two synchronisation sequences:

- the synchronisation sequence or synchronisation code SYNC;
- the basic midamble code.;

The midamble sequence t of the P-CCPCH channel (Primary Common Control Physical Channel), carried in the first time slot TS0 of the frame, is calculated as a shifted version of the basic midamble code.

Among all possible shifted versions of the basic midamble code, the midamble sequence t associated to the P-CCPCH channel is maintained always the same in the TD-SCDMA frame structure, already shown in figure 1.

The operation performed by the slave base station is the correlation with the synchronisation sequence s and with the midamble sequence t associated to the P-CCPCH channel.

The correlation procedure is realized processing the received signal over the frame time period (6400 chips).

The synchronisation code s vector of the reference base station is defined as:

$$\underline{s} = [s_1, \; s_2, \ldots s_j \ldots, s_{64}] \qquad (1)$$

where $s_j$ is a complex QPSK symbol.

The basic midamble code vector is defined as:

$$\underline{m} = [m_1, \; m_2, \ldots m_i \ldots, m_{128}] . \qquad (2)$$

The midamble sequence code t vector of the P-CCPCH channel is expressed as follows:

$$\underline{t} = [t_1, \; t_2, \ldots t_i \ldots, t_{144}] \qquad (3)$$

where $m_i$ and $t_i$ are complex symbols in the set $\{+1, -1, +j, -j\}$.

The complex vector related to the signal received by the slave base station referring to reference base station is expressed as follows:

$$\underline{y} = [y_1, \; y_2, \; \ldots, \; y_{6400}] \qquad (4)$$

Correspondingly, the correlation vectors of the received data frame with the synchronisation code s and midamble sequence code t can be expressed as:

$$\mathrm{corr}_w \; (\underline{y}, \; \underline{s}) = \Sigma \; (y_{w+n-1}) \bullet (s_n^*)$$

$$\text{where the summation extends over } n = 1, \ldots, 64$$

$$(5)$$

and

$$\mathrm{corr}_w \; (\underline{y}, \; \underline{t}) = \Sigma \; (y_{w+n-1}) \bullet (t_n^*)$$

$$\text{where the summation extends over } n = 1, \ldots, 144,$$

Also, $w \in [1, 6400]$ and the operations considered are in the complex field, while $s_n^*$ and $t_n^*$ are the complex conjugate of $s_n$ and $t_n$ respectively.

The correlation amplitude values with the sync code s $\|corr_w(\underline{y}, \underline{s})\|$ and with the midamble sequence t $\|corr_w(\underline{y},\underline{t})\|$ are used to detect the positions of the best correlation peaks for the two synchronisation sequences.

The difference method applied over a number $\mathbf{N_F}$ of consecutive frames), which allows synchronizing the slave base station to the reference base station is described as follows:

The slave base station receives a data frame and calculates the set of 6400 correlation amplitude values (e.g. 6400 values) for the synchronisation code s and the midamble sequence code t respectively ($i^{th}$ measurement, I = 1,... $\mathbf{N_F}$)

The slave base station stores the correlation results (e.g. 6400 amplitude values) for the synchronisation code s in a $i^{th}$ buffer $\underline{\mathbf{b}}_i^{sync}$ and for the midamble sequence code $\underline{t}$ in a $i^{th}$ buffer $\underline{\mathbf{b}}_i^{ts}$.

The slave base station then adds the elements stored in the buffers to produce averaged measurement, such that:

$$\underline{\mathbf{b}}^{sync} = \left( \sum \underline{\mathbf{b}}_i^{sync} \right) \Big/ N_F \qquad \underline{\mathbf{b}}^{ts} = \left( \sum \underline{\mathbf{b}}_i^{ts} \right) \Big/ N_F \qquad (6)$$

where the summation extends for i = 1,..., $N_F$.

The position values of best correlation peaks (in a decreasing order) for the zynchronization code $\underline{s}$ and the midamble sequence code $\underline{t}$ are indicated respectively as:

$$\underline{\mathbf{p}}^{sync} = \left[ p_1, p_2,...p_i,...p_{Nsync} \right] \qquad i \in [1, N_{sync}]$$

$$(7)$$

$$\underline{\mathbf{p}}^{ts} = \left[ p_1, p_2,...p_j,...p_{Nts} \right] \qquad j \in [1, N_{ts}]$$

where $N_{sync}$ and $N_{ts}$ values are the number of the best correlation peaks for the synchronisation code $\underline{s}$ and the midamble sequence code $\underline{t}$ respectively.

The slave base station subsequently constructs the matrix of differences containing all possible differences, as follows:

$$\underline{\mathbf{d}} = \begin{bmatrix} d_{1,1}\, d_{1,2}\,............ & d_{1,Nts} \\ d_{2,1}\, d_{2,2}\,........... & d_{2,Nts} \\ ........................... \\ d_{Nsync,1}\, d_{Nsync,2}\,...\, d_{Nsync,Nts} \end{bmatrix} \qquad (8)$$

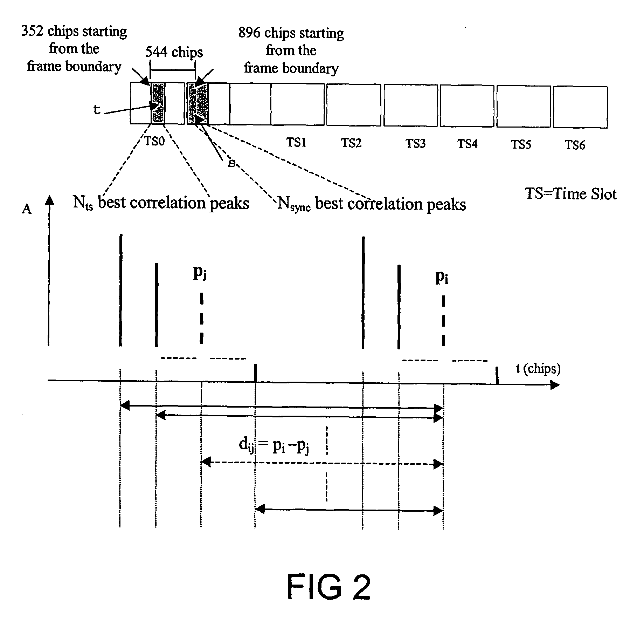

where $d_{i,j} = p_i^{sync} - p_j^{ts}$ indicates the generic difference between the position of the $i^{th}$ best correlation peak for the synchronisation code s and the $j^{th}$ best correlation peak for the midamble sequence code t, as shown in Figure 2).

Increasing the number of the best correlation peaks, performance is improved in terms of reliability and accuracy.

By exploring the matrix elements, the slave base station verifies if at least one difference value exists which is equal to the actual distance (544 chips, in the example considered) between the synchronisation code s and the midamble sequence code t of the P-CCPCH channel.

If any value is equal to 544 chips, the slave base station performs a new measurement cycle, i.e. the measurement cycle is repeated.

If more than one difference exists which is equal to 544 chips, the slave base station chooses the difference that (among all) maximizes the power content of the correlation signal (corresponding to the maximum peak value of the midamble sequence code t).

From the expected difference value $\overline{d}$, the slave base station calculates the position in time of the synchronisation code s and eventually the values of $\mathbf{T_{OFF}}$ and $\Delta\mathbf{T_{sync}}$ so that the slave base station synchronizes its timing offset to the reference base station.

The method for on-air synchronising base stations in a TDDcommunication system just described provides evident advantages over the conventional methods, that use of a single synchronisation sequence only.

By using two synchronisation sequences with a fixed position in the frame allows a mutual reference in the detection of the position of the best correlation peaks, this resulting in improved reliability and accuracy in the calculation of the timing offset.

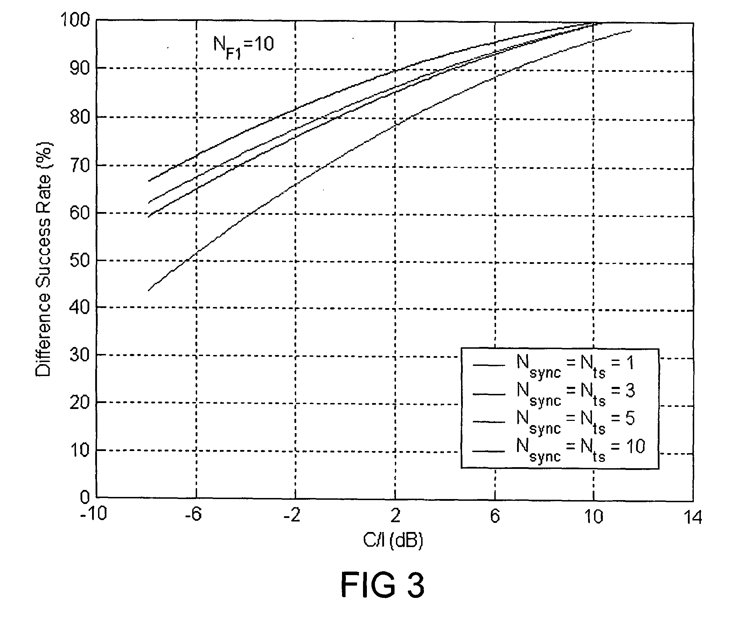

Some comparative results are shown in figures 3 to 5.

Specifically, to characterise the performance evaluation of the method of the invention, the following parameters are introduced:

- difference success rate
- synchronisation success rate

The difference success rate parameter corresponds to the probability to obtain an expected difference $\overline{d}$ (i.e. 544 chips) among all those calculated. This probability is expressed as it follows:

$$\text{Prob}\{d_{i,j}=544\}=\frac{N_{d_{i,j}=544}}{N} \qquad i \in [1, N_{\text{sync}}] \ j \in [1, N_{\text{ts}}] \ (9)$$

where $N_{d_{ij}=544}$ is the number of times in which at least one difference $d_{ij}$ (among all possible)) corresponds to the expected value (i.e 544 chips) and N is the number of measurements on which the difference success rate values are performed (e.g. 1000);

For each measurement if more than one value for $N_{d_{ij}=544}$ exists, the selected difference corresponds to the maximum peak value of the midamble sequence t, which maximizes the power content of the correlation signal.

Experimental results show that the performance, in terms of the difference success rate value, improves when the number $N_{\text{sync}}$ and $N_{\text{ts}}$ of best correlation peaks for a fixed number $N_F$ of frames is increased.

Figure 3 shows the performance improvement achieved by selecting $N_F$ =10.

The synchronisation success rate parameter corresponds to the probability to match the expected position of the synchronisation code s, as received by the slave base station, whenever at least a difference is correct (i.e. equals 544 chips).

Without taking into account propagation delay, the expected position of the synchronisation code s in chips is equal to 896, starting from the frame boundary. So, this probability is expressed as it follows:

$$\text{Prob}\{p_i=896/d_{i,j}=544\}=\frac{N_{p_i=896,d_{i,j}=544}}{N_{d_{i,j}=544}} \qquad i \in [1, N_{\text{sync}}]$$

$$j \in [1, N_{\text{ts}}] \qquad (10)$$

where $N_{p_i=896,d_{ij}=544}$ is the number of times in which one position among the position values of the best correlation peaks is correct (i.e 896 chips), whenever at least one difference $d_{i,j}$ corresponds to the expected value(i.e. 544 chips); $N_{d_{ij}=544}$ is the number of times in which at least one difference $d_{ij}$ (among all possible) corresponds to the expected value (i.e 544 chips).

To illustrate and describe the advantages and benefits of the solution described herein, comparisons were performed with the method previously described in discussing the prior art, i.e. using the correlation with only one synchronisation sequence in terms of synchronisation success rate values.

Such a earlier method will be referred to in the following as SYNC method.

For example, the synchronisation success rate can be calculated as the probability to obtain the expected position of the synchronisation code s by means of the position of the main peak, after having correlated with the only synchronisation code s.

Said probability, indicated with Prob{p=896} is expressed as follows:

$$\text{Prob}\{p=896\} = \frac{N_{p=896}}{N} \qquad\qquad (11)$$

where $N_p$=896 is the number of times in which the position of the main correlation peak corresponds to the expected value(896 chips from the frame boundary); N is the number of measurements on which Prob{p=896} values have been performed (e.g.1000).

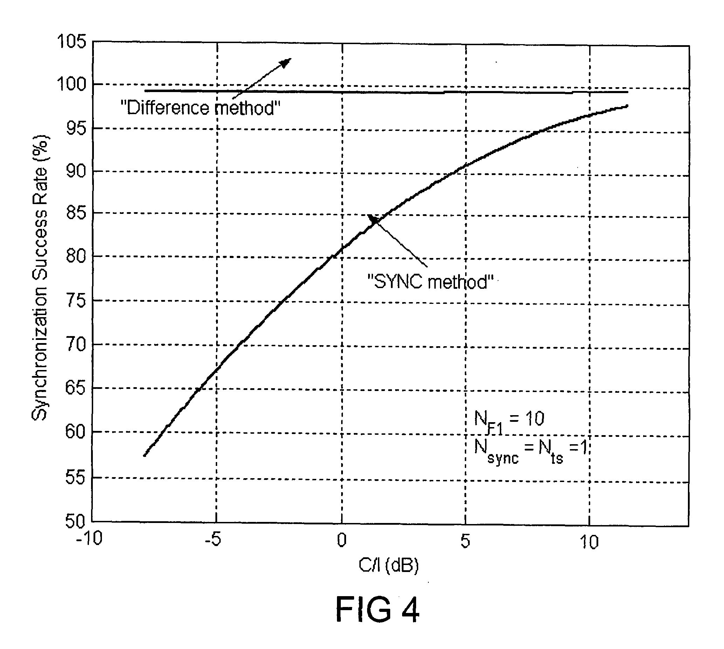

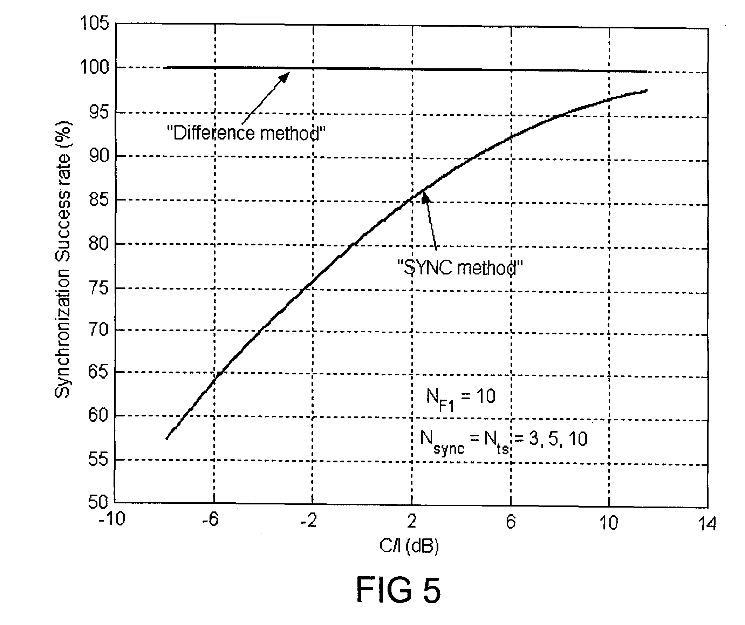

Performance comparison, between the SYNC method and the difference method disclosed herein in terms of reliability are shown in Figure 4 and Figure 5, that correspond to Table 1 and Table 2 shown hereinbelow respectively, increasing the number of correlation best peaks $N_{sync}$ and $N_{ts}$ and for a fixed $N_F$ value (=10). In these Figures the synchronisation success rate vs carrier to interference ratio C/I values is plotted.

| $N_F$ = 10, $N_{sync}$ = $N_{ts}$=1 | | |
|---|---|---|
| C/I (dB) | Difference method | SYNC method |
| -7.94 | 99.2 | 57.8 |
| -3.97 | 99.2 | 69.8 |
| 0.015 | 99.2 | 79.5 |
| 4.01 | 99.3 | 89.3 |
| 8.01 | 99.4 | 94.6 |
| 12.01 | 99.5 | 97.6 |

| $N_F$ = 10 , $N_{sync}$ = $N_{ts}$ =3, 5, 10 | | |
|---|---|---|
| C/I (dB) | Difference method | SYNC method |
| -7.94 | 99.6 | 57.8 |
| -3.97 | 99.6 | 69.8 |
| 0.015 | 99.6 | 79.5 |
| 4.01 | 99.7 | 89.3 |
| 8.01 | 99.7 | 94.6 |
| 12.01 | 99.8 | 97.6 |

It is worth to underline that the reliability approaches to the 100% value as soon as the number of peaks $N_{sync}$ and $N_{ts}$ are equal to 3. This result is maintained also for $N_{sync}$ and $N_{ts}$ values equal to 5, 10. The same trend can be obtained considering different values for the number of frames $N_F$.

Moreover, by considering the maximum measuring error $|t_e|_{max}$ corresponding to this initial synchronisation phase, the performance in terms of accuracy obtained with the difference method of the invention is much better than the SYNC method.

Table 3 hereinbelow illustrates maximum measuring error $|t_e|_{max}$ values vs a set of C/I values, for fixed $N_{sync}$ and $N_{ts}$ values (=1) and for a fixed $N_F$ value (=10). The $|t_e|_{max}$ value has not been considered increasing the $N_{sync}$ and $N_{ts}$ values, since in these cases this result is kept..

| $N_F$ = 10, $N_{sync}$ = $N_{ts}$ =1 | | |
|---|---|---|
| C/I (dB) | $|t_e|_{max}$ (chips) "Difference method" | $|t_e|_{max}$ (chips) "SYNC method" |
| -7.94 | 1 | 5425 |
| -3.97 | 1 | 5342 |
| 0.015 | 1 | 4994 |
| 4.01 | 1 | 4994 |
| 8.01 | 1 | 4994 |

(continued)

| $N_F = 10$, $N_{sync} = N_{ts} = 1$ | | |
|---|---|---|
| C/I (dB) | $|t_e|_{max}$ (chips) "Difference method" | $|t_e|_{max}$ (chips) "SYNC method" |
| 12.01 | 1 | 4994 |

Without prejudice to the underlying principle of the invention, the details and embodiment may vary also significantly, with respect to what has been discussed just by way of example without departing from the scope of the invention, as defined by the claims that follow.

For instance the solution described herein can be applied to all TD-SCDMA Radio System, like TSM (TD-SDCMA System for Mobile Communications) or TDD-LCR (TDD Low Chip Rate), where two synchronisation sequences, i.e. two pilot channels with fixed position in the frame structure are present.

## Claims

1. A method of synchronising stations in a cellular communication system, wherein said stations transmit data frames that contain synchronisation sequences (s,t), the method including the steps of:

   - detecting at a first station at least one synchronisation sequence (s, t) transmitted from a second, reference base station in the system, and
   - synchronising the timing of said first station with respect to the timing of said reference base station on the basis of said at least one synchronisation sequence (s,t),

   the method including the steps of:

   - including in said data frames transmitted from said reference base station first (s) and second (t) synchronisation sequences with a fixed mutual position in said data frame transmitted from said reference base station, and
   - synchronising the timing of said first station on the basis of said mutual position of said first (s) and second (t) synchronisation sequences in said data frames transmitted from said reference base station,

   **characterised in that**:

   - said first station is a slave base station, and
   - the method includes the steps of:
   - detecting said first (s) and second (t) synchronisation sequences at said slave base station by generating respective correlation peaks,
   - determining all possible difference values ($\underline{d}$) between the correlation peaks ($p_i^{sync}$, $p_j^{ts}$) in said first (s) and second (t) synchronisation sequences;
   - deriving from said possible differences an expected difference value ($\overline{d}$);
   - determining from said expected difference value ($\overline{d}$) the position of at least one of said first (s) and second (t) synchronisation sequences; and
   - synchronising said slave base station with respect to said reference base station on the basis of said position of at least one of said first (s) and second (t) synchronisation sequences.

2. The method of claim 1, **characterised in that** the first (s) and the second (t) synchronisation sequence are a synchronisation code (s) and a midamble sequence (t) transmitted by said reference base station, respectively.

3. The method of either claims 1 or 2, **characterised in that** it includes the steps of:

   - detecting, at said slave base station, said first (s) and second (t) synchronisation sequences over a number ($N_F$) of frames to obtain respective detected values,
   - processing said values detected over said number ($N_F$) of frames to obtain a best value for said mutual position, and
   - synchronising the timing of said slave station on the basis of said best value for said mutual position.

**4.** The method of claims 2 and 3, **characterised in that** it includes the steps of generating averaged values over said number ($N_F$) of frames for said respective correlation peaks and the step of storing the correlation results, for the synchronisation code s in a $i^{th}$ buffer $\underline{\mathbf{b}}_i^{sync}$ and for the midamble sequence code $\underline{t}$ in a $i^{th}$ buffer

$$\underline{\mathbf{b}}^{sync} = (\ \sum_{i=1}^{NF}\ \underline{\mathbf{b}}_i^{sync}\ )\ /\ N_F \qquad \underline{\mathbf{b}}^{ts} = (\sum_{i=1}^{NF}\ \underline{\mathbf{b}}_i^{ts}\ )\ /\ N_F$$

**5.** _The method of claim 1, **characterised in that** includes the steps of constructing a matrix ($\underline{d}$) of differences containing all said possible differences, where the element i, j of the matrix $(\ d_{i,j} = \ \ p_i^{sync} - p_j^{ts}\ )$ indicates the generic difference between the position of the $i^{th}$ best correlation peak for the synchronisation code (s) and the $j^{th}$ best correlation peak for the midamble sequence code.

**6.** The method of claim 5, **characterised in that** it includes the steps of:

- verifying if in said matrix ($\underline{d}$) of differences at least a difference value exists which is equal to a predetermined distance indicative of the mutual position of said synchronisation code (s) and said midamble sequence code on the frame structure, and
- if no value is equal to said predetermined distance, performing a new measurement cycle at the slave base station, and
- if more than one difference exists that is equal to said predetermined distance, choosing the difference that maximizes the power content of the correlation signal.

**7.** The method of any of the previous claims, **characterised in that** synchronising the timing of said slave base station is effected by determining the actual timing offset ($\Delta T_{sync}$) between the slave base station frame boundary and the reference base station frame boundary.

**8.** The method-of claim 7, **characterised in that** said actual timing offset ($\Delta T_{sync}$) is determined by taking into account the propagation delay ($T_{delay}$) between said slave base station and said reference base station.

**9.** A cellular communications system including a plurality of base stations, said plurality of base stations including at least a first and a second base station configured to operate as said reference base station and said base station, respectively, in the method of any of the claims 1 to 8.

**10.** A computer program product directly loadable in the memory of a digital computer and comprising software code portion for performing the method of any of the claims 1 to 8 when the product is run on a computer.

**Patentansprüche**

**1.** Verfahren zum Synchronisieren von Stationen in einem zellularen Kommunikationssystem, wobei die besagten Stationen Datenrahmen senden, welche Synchronisationssequenzen (s, t) enthalten, wobei das Verfahren die folgenden Schritte umfasst:

- Detektieren, an einer ersten Station, wenigstens einer Synchronisationssequenz (s, t), die von einer zweiten, eine Referenz-Basisstation darstellenden Station in dem System gesendet wurde, und
- Synchronisieren des Taktes der besagten ersten Station bezüglich des Taktes der besagten Referenz-Basisstation anhand der besagten wenigstens einen Synchronisationssequenz (s, t), wobei das Verfahren die folgenden Schritte umfasst:
- Einfügen in die besagten Datenrahmen, die von der besagten Referenz-Basisstation gesendet wurden, einer ersten (s) und einer zweiten (t) Synchronisationssequenz mit einer festen Position relativ zueinander in dem besagten Datenrahmen, der von der besagten Referenz-Basisstation gesendet wurde, und

- Synchronisieren des Taktes der besagten ersten Station anhand der besagten Position der besagten ersten (s) und zweiten (t) Synchronisationssequenz relativ zueinander in den besagten Datenrahmen, die von der besagten Referenz-Basisstation gesendet werden,

**dadurch gekennzeichnet, dass**:

- die besagte erste Station eine Slave-Basisstation ist, und
- das Verfahren die folgenden Schritte umfasst:
- Detektieren der besagten ersten (s) und zweiten (t) Synchronisationssequenz an der besagten Slave-Basisstation durch Erzeugen jeweiliger Korrelationspeaks,
- Bestimmen aller möglichen Differenzwerte ($\underline{d}$) zwischen den Korrelationspeaks ($p_i^{sync}$, $p_j^{ts}$) in der besagten ersten (s) und zweiten (t) Synchronisationssequenz;
- Ableiten eines erwarteten Differenzwertes ($\bar{d}$) aus den besagten möglichen Differenzen;
- Bestimmen der Position wenigstens einer der besagten Synchronisationssequenzen, der ersten (s) oder der zweiten (t), aus dem besagten erwarteten Differenzwert ($\bar{d}$); und
- Synchronisieren der besagten Slave-Basisstation bezüglich der besagten Referenz-Basisstation anhand der besagten Position wenigstens einer der besagten Synchronisationssequenzen, der ersten (s) oder der zweiten (t).

2. Verfahren nach Anspruch 1, **dadurch gekennzeichnet, dass** die erste (s) und die zweite (t) Synchronisationssequenz ein Synchronisationscode (s) bzw. eine Midamble-Sequenz (t) sind, die von der besagten Referenz-Basisstation gesendet werden.

3. Verfahren nach einem der Ansprüche 1 oder 2, **dadurch gekennzeichnet, dass** es die folgenden Schritte umfasst:

- Detektieren, an der besagten Slave-Basisstation, der besagten ersten (s) und zweiten (t) Synchronisationssequenz über eine Anzahl ($N_F$) von Rahmen, um jeweilige detektierte Werte zu erhalten,
- Verarbeiten der besagten Werte, die über der besagten Anzahl ($N_F$) von Rahmen detektiert wurden, um einen besten Wert für die besagte relative Position zu erhalten, und
- Synchronisieren des Taktes der besagten Slave-Station auf der Basis des besagten besten Wertes für die besagte relative Position.

4. Verfahren nach Anspruch 2 und 3, **dadurch gekennzeichnet, dass** es umfasst: die Schritte des Erzeugens von gemittelten Werten über die besagte Anzahl ($N_F$) von Rahmen für die besagten jeweiligen Korrelationspeaks und den Schritt des Speicherns der Korrelationsergebnisse für den Synchronisationscode s in einem i-ten Puffer $\underline{b}_i^{sync}$ und für den Midamble-Sequenzcode $\underline{t}$ in einem i-ten Puffer $\underline{b}_i^{ts}$,

$$\underline{b}^{sync} = \left( \sum_{i=1}^{NF} \underline{b}_i^{sync} \right) \Big/ N_F \qquad \underline{b}^{ts} = \left( \sum_{i=1}^{NF} \underline{b}_i^{ts} \right) \Big/ N_F$$

5. Verfahren nach Anspruch 1, **dadurch gekennzeichnet, dass** es die Schritte des Konstruierens einer Matrix ($\underline{d}$) von Differenzen umfasst, die alle besagten möglichen Differenzen enthält, wobei das Element i,j der Matrix ($d_{i,j} = p_i^{sync} - P_j^{ts}$) in allgemeiner Form die Differenz zwischen der Position des in der Rangfolge i-ten der besten Korrelationspeaks für den Synchronisationscode (s) und des in der Rangfolge j-ten der besten Korrelationspeaks für den Midamble-Sequenzcode angibt.

6. Verfahren nach Anspruch 5, **dadurch gekennzeichnet, dass** es die folgenden Schritte umfasst:

- Überprüfen, ob in der besagten Matrix ($\underline{d}$) von Differenzen wenigstens ein Differenzwert existiert, welcher gleich einem vorgegebenen Abstand ist, der auf die Position des besagten Synchronisationscodes (s) und des besagten Midamble-Sequenzcodes relativ zueinander in der Rahmenstruktur schließen lässt, und
- falls kein Wert gleich dem besagten vorgegebenen Abstand ist, Ausführen eines neuen Messzyklus an der Slave-Basisstation, und

- falls mehr als eine Differenz existiert, welche gleich dem besagten vorgegebenen Abstand ist, Wählen der Differenz, welche den Leistungsinhalt des Korrelationssignals maximiert.

**7.** Verfahren nach einem der vorhergehenden Ansprüche, **dadurch gekennzeichnet, dass** die Synchronisierung des Taktes der besagten Slave-Basisstation durchgeführt wird, indem der tatsächliche Taktversatz ($\Delta T_{sync}$) zwischen der Rahmengrenze der Slave-Basisstation und der Rahmengrenze der Referenz-Basisstation bestimmt wird.

**8.** Verfahren nach Anspruch 7, **dadurch gekennzeichnet, dass** der besagte tatsächliche Taktversatz ($\Delta T_{sync}$) bestimmt wird, indem die Ausbreitungsverzögerung ($T_{delay}$) zwischen der besagten Slave-Basisstation und der besagten Referenz-Basisstation berücksichtigt wird.

**9.** Zellulares Kommunikationssystem, das eine Vielzahl von Basisstationen umfasst, wobei die besagte Vielzahl von Basisstationen wenigstens eine erste und eine zweite Basisstation umfasst, die so konfiguriert sind, dass sie als die besagte Referenz-Basisstation bzw. die besagte Basisstation in dem Verfahren nach einem der Ansprüche 1 bis 8 fungieren.

**10.** Computerprogrammprodukt, das direkt in den Speicher eines digitalen Computers geladen werden kann und Softwarecodeabschnitte zum Ausführen des Verfahrens nach einem der Ansprüche 1 bis 8, wenn das Produkt auf einem Computer ausgeführt wird, umfasst.


## Revendications

**1.** Procédé de synchronisation de stations au sein d'un système de communication cellulaire, dans lequel lesdites stations transmettent des trames de données qui contiennent des séquences de synchronisation (s, t), le procédé incluant les étapes :

- de détecter au niveau d'une première station au moins une séquence de synchronisation (s, t) transmise à partir d'une seconde, station de base de référence dans le système, et
- de synchroniser le rythme de ladite première station par rapport au rythme de ladite station de base de référence sur la base de ladite au moins une séquence de synchronisation (s, t),

le procédé incluant les étapes :

- d'inclure dans lesdites trames de données transmises à partir de ladite station de base de référence une première (s) et une seconde (t) séquences de synchronisation dotées d'une position mutuelle fixe au sein de ladite trame transmise à partir de ladite station de base de référence, et
- de synchroniser le rythme de ladite première station sur la base de ladite position mutuelle desdites première (s) et seconde (t) séquences de synchronisation au sein desdites trames de données transmises à partir de ladite station de base de référence,

**caractérisé en ce que** :

- ladite première station est une station de base esclave, et
- le procédé inclut les étapes :
- de détecter lesdites première (s) et seconde (t) séquences de synchronisation au niveau de ladite station de base esclave en générant des pics de corrélation respectifs,
- de déterminer toutes les valeurs de différences possibles (d) entre les pics de corrélation ($p_i^{sync}$, $p_j^{ts}$) dans lesdites première (s) et seconde (t) séquences de synchronisation ;
- de faire dériver desdites différences possibles une valeur de différence attendue ($\overline{d}$) ;
- de déterminer à partir de la valeur de différence attendue ($\overline{d}$) la position d'au moins une desdites première (s) et seconde (t) séquences de synchronisation ; et
- de synchroniser ladite station de base esclave par rapport à ladite station de base de référence sur la base de ladite position d'au moins une desdites première (s) et seconde (t) séquences de synchronisation.

**2.** Procédé selon la revendication 1, **caractérisé en ce que** la première (s) et la seconde (t) séquences de synchronisation sont respectivement un code de synchronisation (s) et une séquence de préambule intermédiaire (t) transmis par ladite station de base de référence.

**3.** Procédé selon l'une ou l'autre des revendications 1 ou 2, **caractérisé en ce qu'**il inclut les étapes :

- de détecter, au niveau de ladite station de base esclave, lesdites première (s) et seconde (t) séquences de synchronisation sur un nombre ($N_F$) de trames pour obtenir les valeurs détectées respectives, et
- de traiter lesdites valeurs détectées sur ledit nombre ($N_F$) de trames pour obtenir une meilleure valeur pour ladite position mutuelle, et
- de synchroniser le rythme de ladite station esclave sur la base de ladite meilleure valeur pour ladite position mutuelle.

**4.** Procédé selon les revendications 2 et 3, **caractérisé en ce qu'**il inclut l'étape de générer des valeurs moyennées sur ledit nombre ($N_F$) de trames pour lesdits pics de corrélation respectifs et l'étape de stocker des résultats de corrélation, pour le code de synchronisation s dans une $i^{\text{ème}}$ mémoire tampon $\underline{b}_i^{\text{sync}}$ et pour le code de séquence de préambule intermédiaire $\underline{t}$ dans une $i^{\text{ème}}$ mémoire tampon $\underline{b}_i^{\text{ts}}$.

$$\underline{b}^{sync} = \left( \sum_{i=1}^{NF} \underline{b}_i^{sync} \right) / N_F \qquad \underline{b}^{ts} = \left( \sum_{i=1}^{NF} \underline{b}_i^{ts} \right) / N_F$$

**5.** Procédé selon la revendication 1, **caractérisé en ce qu'**il inclut les étapes de construire une matrice ($\underline{d}$) de différences contenant toutes lesdites différences possibles, où l'élément i,j de la matrice ($d_{ij} = p_i^{sync} - p_j^{ts}$) indique la différence générique entre la position du $i^{\text{ème}}$ meilleur pic de corrélation pour le code de synchronisation (s) et le $j^{\text{ème}}$ meilleur pic de corrélation pour le code de la séquence de préambule intermédiaire.

**6.** Procédé selon la revendication 5, **caractérisé en ce qu'**il inclut les étapes :

- de vérifier si dans ladite matrice ($\underline{d}$) de différences au moins une valeur de différence existe qui est égale à une distance prédéterminée indicative de la position mutuelle dudit code de synchronisation (s) et dudit code de séquence de préambule intermédiaire sur la structure de trame, et
- si aucune valeur n'est égale à ladite distance prédéterminée, de réaliser un nouveau cycle de mesure au niveau de la station de base esclave, et
- si plus d'une différence existe qui est égale à ladite distance prédéterminée, de choisir la différence qui maximise la puissance relative du signal de corrélation.

**7.** Procédé selon l'une quelconque des revendications précédentes, **caractérisé en ce qu'**une synchronisation du rythme de ladite station de base esclave est effectuée en déterminant le décalage de rythme réel ($\Delta T_{sync}$) entre la limite de trame de la station de base esclave et la limite de trame de la station de base de référence.

**8.** Procédé selon la revendication 7, **caractérisé en ce que** ledit décalage de rythme réel ($\Delta T_{sync}$) est déterminé en prenant en compte le retard de propagation ($T_{delay}$) entre ladite station de base esclave et ladite station de base de référence.

**9.** Système de communications cellulaires incluant une pluralité de stations de base, ladite pluralité de stations de base incluant au moins une première et une seconde stations de base configurées pour fonctionner comme ladite station de base de référence et ladite station de base, respectivement, au sein du procédé selon l'une quelconque des revendications 1 à 8.

**10.** Produit de programme d'ordinateur directement chargeable dans la mémoire d'un ordinateur numérique et comprenant une partie de code logiciel destinée à réaliser le procédé selon l'une quelconque des revendications 1 à 8 quand le produit est lancé sur un ordinateur.

GP1

DwPTS          UpPTS                    GP2

| | | | | | | | |
|---|---|---|---|---|---|---|---|
| ↓ | | | ↑ | ↑ | ↓ | ↓ | ↓ | ↓ |
| TS0 | | | TS1 | TS2 | TS3 | TS4 | TS5 | TS6 |

| D | | D | |
|---|---|---|---|
| Data symbols | | Data symbols | GP2 |

t

| | |
|---|---|
| GP | |

s

| | |
|---|---|
| SYNC1 | GP |

↑ Uplink          ↓ Downlink          TS=Time Slot          GP=Guard Period
Traffic Slots          Traffic Slots

# FIG 1

EP 1 424 790 B1

352 chips starting from the frame boundary

544 chips

896 chips starting from the frame boundary

t

TS0

s

TS1  TS2  TS3  TS4  TS5  TS6

$N_{ts}$ best correlation peaks

$N_{sync}$ best correlation peaks

TS=Time Slot

A

$p_j$

$p_i$

t (chips)

$d_{ij} = p_i - p_j$

# FIG 2

FIG 3

EP 1 424 790 B1

EP 1 424 790 B1

FIG 4

$N_{F1} = 10$
$N_{sync} = N_{ts} = 1$

"SYNC method"

"Difference method"

C/I (dB)

Synchronization Success Rate (%)

EP 1 424 790 B1

FIG 5

17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- TR 25928
- XP 002236894
- EP 1041746 A
- EP 1195924 A